Europäisches Patentamt

European Patent Office

Office européen des brevets

(19)

(11) Publication number: **0 045 601**
**A1**

(12) **EUROPEAN PATENT APPLICATION**

(21) Application number: **81303403.0**

(22) Date of filing: **24.07.81**

(51) Int. Cl.³: **F 02 B 1/02**
**F 02 M 31/16, F 02 M 17/20**

(30) Priority: **31.07.80 US 174005**

(43) Date of publication of application:
**10.02.82 Bulletin 82/6**

(84) Designated Contracting States:
**AT BE CH DE FR GB IT LI LU NL SE**

(71) Applicant: **PATE-HANSEN ENTERPRISES, INC.**
**432 Wing Park Boulevard**
**Elgin Illinois 60120(US)**

(72) Inventor: **Hansen, Herbert N.W.**
**432 Wing Park Boulevard**
**Elgin Illinois 60120(US)**

(72) Inventor: **Pate, Dale F.**
**432 Wing Park Boulevard**
**Elgin Illinois 60120(US)**

(74) Representative: **George, Roger David et al,**
**Raworth, Moss & Cook 36 Sydenham Road**
**Croydon Surrey CR0 2EF(GB)**

(54) **Vapour fuel system for an internal combustion engine.**

(57) An internal combustion engine is operated with an alcohol fuel heated by a heat exchanger and vaporized by a series of electric heating elements prior to combustion. The heat exchanger uses waste heat from the engine coolant. In addition, means for heating and humidifying the combustion air is provided to insure complete vaporization of the alcohol fuel and to overcome the lower caloric power potential of alcohol as compared to gasoline.

EP 0 045 601 A1

FIG.I

- 1 -

VAPOR FUEL SYSTEM FOR AN
INTERNAL COMBUSTION ENGINE

Background of the Invention

The present invention relates generally to an internal combustion engine operable with an alcohol fuel and, specifically, to a fuel system for supplying a vaporized fuel to the engine. The term alcohol as used herein includes a variety of hydroxyl derivatives of hydrocarbons, such as, methanol, ethanol, isopropanol, tertiary butanol and mixtures thereof with or without water.

Internal combustion engines operated with alcohol or a blended gasoline-alcohol mixture have been in use for many years. Such blending, however, lowers the boiling point of the gasoline and thereby causes vapor lock in the fuel pump at a lower temperature than would be the case with pure gasoline. In addition, the introduction of water to a blended gasoline-alcohol fuel mixture causes the mixture to separate into its constituent phases. Since the resultant fuel supplied to the carburetor is not of constant composition and does not correspond to the composition to which the carburetor was initially adjusted, the engine malfunctions.

- 2 -

Thus, the need exists for a fuel system which, in addition to overcoming the cold starting difficulties of an alcohol fueled engine, can operate with either gasoline, propane or alcohol.

However, another problem exists. The use of a conventional carburetor often leads to inefficient combustion with unburned fuel passing through the exhaust manifold to the atmosphere. This inefficient combustion is evidenced by an increase in hydrocarbon emissions.

As an alternative, the fuel can be injected. A fuel injected system introduces small droplets of fuel into an air stream for passage to a cylinder. The injection inlets usually have an inside diameter of at least 0.050 inches. (1.27cm) Although a fuel injected system is more efficient than a conventional carburetor, the injection of such large fuel droplets also results in incomplete combustion.

In an ideal fuel system, the size of each droplet would approach that of a single molecule of fuel. If each fuel molecule could be surrounded by air, complete combustion would be possible. This would result in greater engine efficiency and power output as well as the possible elimination of all emissions other than carbon dioxide and water.

By removing the carburetor and vaporizing the alcohol fuel, the present invention produces almost complete fuel combustion. In addition, any dependence on gasoline to overcome the cold starting difficulties normally associated with alcohol fueled engines is eliminated.

Summary of the Invention

The invention provides means for reducing the dependence of an internal combustion engine on hydrocarbon fuels derived from crude oil. Specifically, the present invention provides a fuel system which supplies alcohol vapors to an engine and produces nearly complete combustion.

Electrical means is provided to heat and vaporize the alcohol fuel prior to ignition and thus avoid the cold starting problems associated with the use of alcohol as fuel. In addition, means are provided to heat the alcohol prior to combustion using thermal energy generated by the engine under normal operating conditions.

The method according to the present invention comprises the steps of conveying the alcohol to a heat exchanging device in which is incorporated an electric heating element, and transferring heat from the electric heating element or the heated engine coolant to the alcohol. The heated alcohol flows through a conduit from the heat exchanger to a vaporization chamber which contains a second electric heating element.

In the chamber the alcohol is heated to its boiling point. The alcohol vapors produced upon boiling are then passed directly to the intake manifold of the engine. All components of the fuel system through which the heated alcohol and alcohol vapor flow are insulated to minimize heat loss.

An additional heat exchanging device located on the exhaust line heats a solution of 5-50% alcohol in water to boiling. As a result, the vapor content and temperature of the air passing to the intake manifold is increased, and steam is created to maintain the alcohol that flows from the vaporization chamber in the gaseous state.

It is an object of this invention to increase the efficiency of an alcohol operated internal combustion engine by providing means for vaporizing the

- 4 -

alcohol fuel as well as means for heating and humidifying the air used in combustion.

It is a further object of this invention to provide a means for overcoming the cold starting problems of an internal combustion engine operated with alcohol as fuel.

Other objects and advantages will be apparent from the following detailed description made with reference to the accompanying drawings.

Brief Description of the Drawings

Figure 1 is a schematic representation of a preferred embodiment of the invention.

Figure 2 is a cross-sectional view of a heat exchanging device which heats the alcohol fuel with hot engine coolant.

Figure 3 is a cross-sectional view of a vaporization chamber which heats and vaporizes the alcohol fuel prior to combustion.

Figure 4 is a side elevational view of an exhaust gas heat exchanging unit.

Figure 5 is a sectional view taken along the line 5-5 of Figure 4.

Detailed Description of the Invention

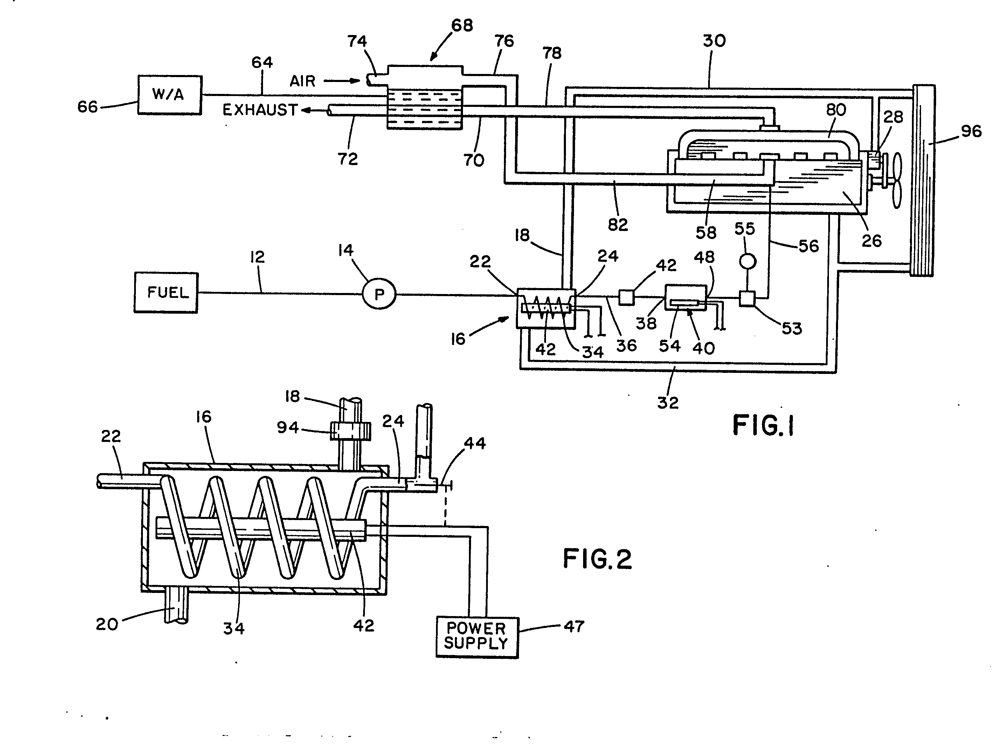

As illustrated in Figure 1, fuel is stored in a tank 10 and is drawn therefrom via conduit 12 under pressure produced by a fuel pump 14. The fuel may be selected from the group consisting of methanol, ethanol, isopropanol, tertiary butanol or mixtures thereof with or without water.

The alcohol fuel flows through the conduit 12 to a heat exchanger 16 at a pressure of approximately two pounds per square inch. The heat exchanger 16, best shown in Figure 2, is a hollow cylinder having a liquid coolant inlet 18 and outlet 20 plus a fuel inlet 22 and outlet 24. Liquid coolant from the

- 5 -

internal combustion engine 26 is circulated by a
water pump 28 through a hose 30 to the coolant inlet
18. The coolant circulates through the heat exchanger
16 and, via coolant outlet 20, returns to the engine
26 through a hose 32.

Fuel flows from conduit 12 to the fuel
inlet 22 of the heat exchanger and through a tube
34 located within heat exchanger 16. Tube 34 is
connected to the fuel outlet 24. A conduit 36 communicates the fuel outlet 24 of the heat exchanger
16 with an inlet 38 of a vaporization chamber 40.

An elongated, rod-like electric heating
element 42 is located within the heat exchanger 16,
tube 34 being concentrically disposed about the heating element. The electric heating element supplements
the heat from the engine to overcome the cold starting
difficulties associated with use of alcohol fuel. A
thermostat 44 located between the heat exchanger 16
and the vaporization chamber 40 controls the electric
heating element 42. Electric heating element 42 is
operated by power supply 47, which may be the vehicle's
battery.

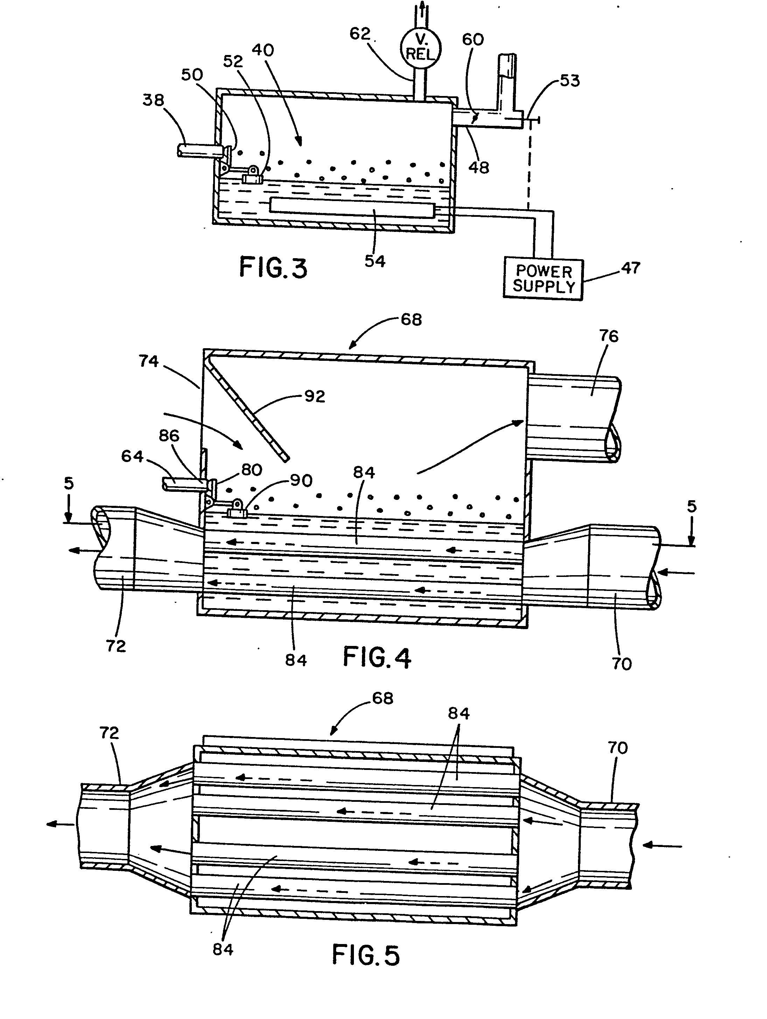

The heated alcohol flows from the heat
exchanger 16 through conduit 36 to the inlet 38 of the
vaporization chamber 40. As illustrated in Figure 3,
the vaporization chamber 40 has an outlet 48 in addition to the inlet 38. The level of fluid in the
vaporization chamber 40 is regulated by a valve 50
and a float 52.

Electric heating element 54 located below
the fluid level within the vaporization chamber 40
further heats the alcohol to boiling. A thermostat
53 located between the chamber 40 and the intake
manifold 58 controls the electric heating element 54
and a ready light 55. The ready light indicates when

0045601

- 6 -

the alcohol fuel is vaporized so that the engine can
be started. The alcohol vapors produced flow through
the outlet 48 to a conduit 56 which is connected to
the intake manifold 58 of the engine 26. A butterfly
valve 60 controls the volume of alcohol vapor which
flows to the manifold. A safety valve 62 opens to
release alcohol vapor if the pressure within the
vaporization chamber 40 exceeds a predetermined value.

Referring again to Figure 1, a conduit 64
communicates a tank 66 with an exhaust gas heat exchanger 68. The alcohol-water solution contained in
the tank 66 flows by gravity to the exhaust gas heat
exchanger 68. The freezing of the alcohol-water solution at low temperatures is prevented by increasing
the alcohol concentration within the range of 5 to
50% by volume to depress the freezing point of the
solution.

As further shown in Figure 1, the exhaust
gas heat exchanger 68 is a hollow cylinder comprised,
in part, of exhaust gas inlet 70, exhaust gas outlet
72, air inlet 74 and air outlet 76. Exhaust gas inlet
70 is connected via exhaust pipe 78 with the exhaust
manifold 80 of the engine 26. The air outlet 76 is
connected via a hose 82 with the intake manifold 58
of the engine 26. Exhaust gas outlet 72 and air
inlet 74 are in communication with the atmosphere.

Referring now to Figure 4, the exhaust gas
inlet 70 is connected to exhaust gas outlet 72 by
a plurality of heat transfer tubes, generally designated by the numeral 82. Surrounding the heat
transfer tubes is a solution of 5-50% alcohol in
water from tank 66. The alcohol solution enters the
heat exchanger 68 through an inlet 86. The level of
the fluid in heat exchanger 68 is regulated by a
valve 88 and a float 90.

- 7 -

Hot exhaust gases are used to heat the alcohol-water solution in heat exchanger 68 to boiling. The gases are admitted at exhaust gas inlet 70, are passed through heat transfer tubes 84 and are released as cooled gases to the ambient atmosphere through exhaust gas outlet 72. Since the exhaust gases pass through a series of tubes, rather than through a single heat transfer tube, the surface area of the tubes in contact with the surrounding fluid is increased and maximum heat transfer from the gases passing through tubes 84 to the alcohol-water solution results.

Incoming air through the air inlet 74 is deflected toward the surface of the boiling solution by a baffle 92. Thereafter, the air passes over the surface of the boiling solution, absorbs moisture and passes through the air outlet 76 to flow through hose 82 to the intake manifold 58.

The operation of the invention is as follows. Thermostat 44, which controls electric heating element 42, is adjusted to a temperature slightly less than the boiling point of the alcohol used. For example, the boiling point of methanol is 149°F. (65°C) and that of ethanol is 173°F. (73°C) The heated alcohol flows through conduit 36 to the vaporization chamber 40. Thermostat 53, which controls electric heating element 54, is adjusted to a temperature slightly greater than the boiling point of the alcohol used. When the alcohol reaches its boiling point, the light 55 illuminates to indicate that the engine may be started.

The volume of alcohol vapor that flows from the vaporization chamber 40 and the intake manifold 58 can be manually controlled by the operator. As indicated, each thermostat is adjustable. Thus, the fuel system is capable of using alcohols with different

- 8 -

boiling points. In addition, the system can adapt
to ambient temperature changes and pressure changes
due to variations in altitude. A thermostat adjustable within the range of 140 and 220°F/is suitable
(60°C and 104°C)
for this purpose.

When the engine reaches its normal operating
temperature and the engine coolant is heated sufficiently, a thermostatic valve 94 opens to allow the flow of
heated engine coolant from the radiator 96 through
heat exchanger 16. The heated coolant supplements
the electric heating element 42 to heat the alcohol
fuel.

The incoming air to the carburetor used in
combustion is heated and humidified in the following
manner. Tank 66 gravity feeds a solution of 5-50%
alcohol in water to exhaust gas heat exchanger 68.
The exhaust gases passing through exhaust pipe 78
heat the alcohol-water solution to boiling. As the
incoming air passes over the boiling solution, the
air is heated and becomes saturated with alcohol and
water. The humidified air passes through air outlet
76 to the intake manifold 58 which is in communication
with the cylinders of engine 26. The heated air aids
in the vaporization of the alcohol fuel. The additional moisture creates steam in the engine cylinder
which results in a higher internal pressure than in
the case of a heated dry gas due to the steam:water
volumetric expansion ratio of 1800:1. A dry gas, on
the other hand, only expands in direct proportion to
its absolute temperature.

A suitable corrosion inhibitor may be added
to the fuel system to inhibit the corrosive effects
of the water present. Alternatively, suitable corrosion-resistant materials may be utilized in the fabri-
cation of the system.

As an additional advantage of the invention, greater expansive forces are realized upon combustion due to the presence of steam in the engine cylinders at elevated temperatures. The addition of water in the form of steam to the system may have the additional advantage of reducing the generation of emissions because the cooling effect of the condensed water lowers the combustion temperature thereby reducing nitrogen oxide production which is temperature-time dependent.

It will be understood that various changes and modifications may be made in the above described apparatus without departing from the spirit thereof, particularly as defined in the following claims.

- 1 -

Claims:

1. A fuel system for an internal combustion engine, having an air intake, cooling and exhaust system, said fuel system comprising:

(a) a fuel reservoir adapted to contain a fuel selected from the group consisting of methanol, ethanol, isopropanol, tertiary butanol, mixtures of said alcohols and mixtures of said alcohols with water;

(b) means for pre-heating the fuel in said reservoir, said pre-heating means including a heat exchanger operatively communicating with the cooling system of said internal combustion engine, whereby during operation of the engine the waste heat therefrom is utilized to pre-heat the fuel; and

(c) means for vaporizing the pre-heated fuel, said vaporizing means including a chamber communicating said heat exchanger and said engine air intake system whereby the vaporized fuel is provided to the air intake to power the engine.

2. The fuel system according to Claim 1 further including means for pre-heating and increasing the moisture and alcohol content of the combustion air supplied to said engine, said pre-heating and moisturizing means being in communication with said air intake and including a heat exchange means having a water-containing fluid therein in communication with said exhaust system whereby heat from the exhaust system is transferred to said fluid to heat and humidify the combustion air passing through the heat exchanging means.

3. The fuel system according to Claim 1 wherein said heat exchanger is a container having an inlet and outlet for communication with said engine cooling system to permit the flow of engine coolant therethrough and wherein said fuel passes through

- 2 -

said container in a conduit immersed in said coolant to permit the transfer of heat from the engine coolant to the fuel.

4. The fuel system according to Claim 3 wherein said heat exchanger further includes:

(a) an electric heating element disposed in said container in proximity to said immersed conduit; and

(b) thermostatic control means for operating said heating element when the fuel temperature in said conduit is below a preset value.

5. The fuel system according to Claim 3 or Claim 4 further including a thermostat positioned at the inlet of said container for permitting coolant to flow therethrough only when the temperature of said coolant exceeds a pre-selected value.

6. The fuel system according to Claim 1 wherein said vaporizing means chamber includes:

(a) an inlet for communicating with said heat exchanger and an outlet for communicating with said air intake system to permit the flow of the preheated fuel therethrough;

(b) an electric heating element disposed in said chamber immersed in said fuel; and

(c) thermostatic control means for operating said heating element when the fuel temperature in said chamber is below a preset value.

7. The fuel system according to Claim 6 wherein said vaporizing means chamber further includes valve means in said chamber for permitting fuel flow from the heat exchanger to the chamber when the fuel level in the latter drops below a specified level.

8. The fuel system according to Claim 6 or Claim 7 wherein said chamber further includes a relief valve for releasing pressure from within the chamber when the internal pressure exceeds a preset level.

9. The fuel system according to Claim 2 wherein the heat exchange means of said pre-heating means includes:

(a) a container having a water containing fluid therein maintained at a specified level, said container including an air inlet and outlet disposed above the specified fluid level, whereby the air passes over the surface of said fluid; and

(b) at least one exhaust gas conduit passing through said container below said fluid level, said conduit having an inlet and outlet;

whereby gas from the exhaust system is directed through the conduit to heat said fluid which in turn pre-heats and humidifies the combustion air passing over the surface of said fluid.

FIG.1

FIG.2

POWER SUPPLY

FIG.3

POWER SUPPLY

FIG.4

FIG.5

European Patent Office

**EUROPEAN SEARCH REPORT**

Application number

EP 81 30 3403

| | DOCUMENTS CONSIDERED TO BE RELEVANT | | CLASSIFICATION OF THE APPLICATION (Int Cl.3) |
|---|---|---|---|
| Category | Citation of document with indication, where appropriate, of relevant passages | Relevant to claim | |
| E | <u>GB - A - 2 048 375</u> (ENCO)<br>* Page 1, lines 1-81 * | 1,2,4,<br>6,7 | F 02 B 1/02<br>F 02 M 31/16<br>F 02 M 17/20 |
| | <u>EP - A - 0 022 876</u> (NISSAN)<br>* Page 4, line 8 to page 7,<br>line 28 * | 1,2,4,<br>8,9 | |
| | <u>US - A - 4 098 231</u> (DAVIS)<br>* Column 1, line 59 to column 3,<br>line 61 * | 1-4,<br>6,7 | TECHNICAL FIELDS SEARCHED (Int. Cl.3) |
| | <u>US - A - 4 180 036</u> (WOLF)<br>* Column 3, line 16 to column 4,<br>line 42 * | 3,4,5 | F 02 B<br>F 02 M |
| | <u>GB - A - 1 422 646</u> (LACREX)<br>* Page 1, line 59 to page 2,<br>line 65 * | 1,2,3 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 30-10-1981 | WASSENAAR |

EPO Form 1503.1  06.78